# EUROPEAN PATENT APPLICATION

(11) **EP 0 813 073 A2**
(43) Date of publication of application: **17.12.1997**
(21) Application number: 97303944.9
(22) Date of filing: 06.06.1997
(51) Int. Cl.: G01S 5/16

(54) **Object identification and precision localization through combined video and infrared signals**

(30) Priority: 14.06.1996 US 663962
(71) Applicant: XEROX CORPORATION, Rochester New York 14644 (US)
(72) Inventor: Greene, Daniel H., Sunnyvale, California 94087 (US); Want, Roy, Los Altos, California 94024 (US); Newman, William M., Cambridge, Cambs (GB)
(74) Representative: Reynolds, Julian David

(57) **Abstract**

A system (10) for precisely locating infrared tags (40-45, 50, 51, 72, 76, 77) has multiple CCD video cameras (20-24, 62) capable of detecting both visible light and infrared light. Each of the video cameras (20-24, 62) is configured to provide a sequence of image frames for analysis by an image processing system. The image processing system extracts modulated infrared signals emitted by infrared identification tags (40-45, 50, 51, 72, 76, 77) from the sequence of images and identifies the spatial location of the infrared tag with submeter precision using information obtained from both visible light images and infrared light images. Large numbers of colocated infrared identification tags (40-45, 50, 51, 72, 76, 77) can be detected and tracked in parallel using this system.

## Description

The present invention relates to a system for detection, identification, and spatial localization of objects tagged with infrared signaling devices. More specifically, the present invention relates to the use of CCD video cameras for detecting and identifying multiple colocated tagged objects through active or passive emitted infrared signals, and determining spatial location of the identified object after image analysis of video frames generated by the CCD video camera.

Quickly locating readily movable objects such as books, tools, or portable computers in a room can often be difficult. Books can be misplaced or incorrectly filed on shelves, portable computers can be moved to other rooms, and tools can be lost in a jumble of material in a corner of a room. One possible solution to this problem relies on tagging an object with a low power transmitter capable of emitting an identification signal. With such a system, the presence or absence of a particular tagged object can be ascertained. Unfortunately, the spatial resolution of generally available identification systems is quite low, with localization only on the order of several meters (i.e. room sized) being possible. Further, such systems can generally only track a limited number of objects, may only be able to provide serial identification and localization (instead of substantially parallel identification and localization), and often require proximity of the detector (for example, bar code reading systems or implanted identification devices for tagging pets or laboratory animals). While sophisticated or custom designed systems that support both object identification and precision localization are available, these solutions are generally quite expensive or have a limited range of applications.

The complementary problem of identifying precise regions of a room for use by movable objects similarly suffers from a lack of inexpensive solutions. For example, one might desire to automatically direct a camera (by rotation of a camera mount) to point at various specified regions of a room. There is currently no widely available and inexpensive system for tagging areas of the room to define possible regions that the camera might focus upon.

What is needed is an inexpensive system for tagging objects or defining regions of interest that does not require proximity of the detector, can support identification of large numbers of tagged objects or regions in parallel, and has a submeter spatial localization resolution on the order of centimeters or millimeters, rather than meters, permitting identification and localization within less than room size regions. This system would allow for quick identification and location of individual objects (e.g. a particular book) or groups of objects (e.g. books by a particular author). Such a system would require only inexpensive components such as CCD (charge couple device) video cameras to act a detectors, inexpensive passive or active infrared devices for identification tags, and an image processing computer for determining identification and spatial localization of a tagged object or defined region. Ideally, such a system would also have the ability to track and spatially localize slow moving objects or groups of objects (e.g. a person with an attached identification tag or a tagged laptop computer held by that person). With high speed video cameras or other high performance components, such a system could even provide spatial localization and tracking of quickly moving objects such as a pen tip, enabling automated handwriting interpretation.

The present invention provides a system for precisely locating infrared tags, comprising: at least two video cameras capable of detecting infrared light, each of the video cameras being configured to provide a sequence of images, an infrared tag for providing modulated infrared signals, an image processing system configured to extract the modulated infrared signals from the sequence of images and identify the spatial location of the infrared tag.

Preferably, at least two conventional and widely commercially available CCD video cameras having overlapping field of views are used.

Various possible infrared signaling modes of operation are contemplated. In one preferred embodiment infrared identification tags intermittently emit infrared detection signals at a rate less than the frame rate of the video camera to establish spatial location. The pattern of infrared blinking seen through comparison of multiple frames of the video cameras can be used to positively identify infrared tags and transfer identification information or other data. Advantageously, because multiple infrared identification tags are spatially separated within the same frame of the video camera, identification and tracking of multiple tags in parallel can be achieved. In practice, data acquisition from a room can utilize large numbers of identifying infrared tags attached to objects. In addition to objects, infrared tags can be deployed to describe particular positions, locations, or areas in a room, or can be used as remote sensors for providing telemetry and location dependent data (e.g. thermometers or motion detectors).

In certain embodiments, multiple tags attached to a movable object can be used to determine and track orientation, as well as location, of the objects. For example, if an object is rotated, use of two or more attached tags could allow determination of the angle of rotation. Use of multiple tags also alleviates problems associated with obscuration of an object, and increases accuracy of position determination. Further, multiple identification tags can be used to increase rate of data transfer.

Alternative embodiments, including the use of visible light instead of infrared, or variant position and data encoding schemes for infrared signals, are also contemplated within the scope of the present invention. For example, it is possible to use a separate infrared communication channel receiver for reception of infrared identification signals that are emitted substantially time coincident with infrared detection signals used to establish spatial location of the infrared tag. Using time coincidence methods, it is possible to transfer data at much higher rates than the relatively slow data transfer rates possible using multiple frame comparisons from the video cameras alone. In addition, to reduce power requirements it is possible to use passive infrared reflectors as tags (with a separate, room mounted infrared flasher providing infrared light on demand), or to use infrared identification tags that are activated only in response to an identification request.

The present invention provides a system for precisely locating identification tags, comprising: at least two video cameras, each video camera being configured to provide a sequence of images at a first frame rate, an identification tag for providing a series of spaced apart signals at a second frame rate, less than the first frame rate, the signals being perceptible by the video cameras, an image processing system configured to extract the three dimensional spatial location of the identification tags from the sequence of images, and a data transfer system for transferring data from the identification tag, the data being correlated with the three dimensional spatial location of the identification tag as determined by the image processing system.

Advantageously, the present invention uses relatively inexpensive and commonly available components such as infrared transmitters and CCD video cameras to provide highly precise spatial localization of identification tags. Suitable high quality CCD video cameras are widely employed for consumer security systems. Because of the economies of scale, such CCD video cameras are quite inexpensive, making them ideal for this application.

Since infrared signals are invisible to the human eye, yet easily visible to CCD video cameras, the infrared signaling system is essentially invisible to users, while still being easy for automated systems to locate and interpret without elaborate image processing techniques. The present invention can be quickly implemented after computer network connected video cameras are installed, and does not require complex setup or initialization. Using a limited number of inexpensive video cameras, the present invention a!lows for tracking large numbers of infrared tags capable of conveying limited amounts of object data, with density bandwidth problems typical of cellular mobile communications being substantially avoided.

Additional functions, objects, advantages, and features of the present invention will become apparent from consideration of the following description and drawings of preferred embodiments, in which:-
Figure 1 is a schematic outline of a system for precisely locating infrared identification tags using a CCD video camera;
Figure 2 is an expanded view of a search region illustrated in Figure 1, with books having single or multiple infrared tags being illustrated;
Figure 3 is a graph illustrating infrared pulse intensity versus time, with periodic pulses to establish position followed by data pulses to transfer information being shown;
Figure 4 illustrates selected image processed frames of two video cameras showing blinking infrared data signals capable of being correlated to determine spatial position;
Figure 5 is an alternative pulse scheme using two substantially time coincident communication channels to determine position and transfer data;
Figure 6 illustrates selected image processed frames of two video cameras operating in accordance with the alternative pulse scheme of Figure 5, with blinking infrared data signals capable of being correlated to determine spatial position on a first communication channel, and data provided on a substantially time coincident second communication channel; and
Figure 7 schematically illustrates construction of an active infrared tag.

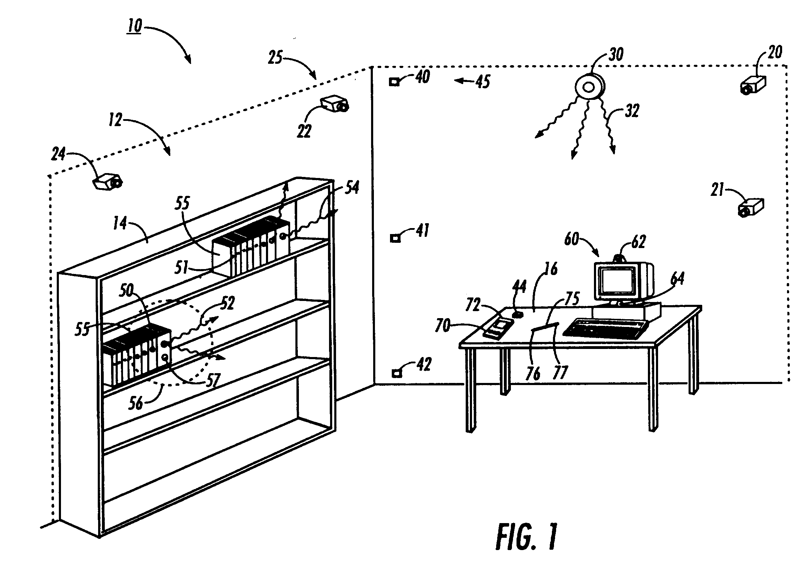

As illustrated in Figure 1, a system 10 for precisely locating infrared signal sources 25 (infrared tags) includes multiple CCD video cameras 25 positioned in room 12. These video cameras 25 may have a fixed view, such as CCD video cameras 20, 21, 22, and 62, or they may have a movable view such as provided by movable CCD video camera 24. Infrared signal sources 45 suitable for spatial localization, identification and data transference can be positioned on static or essentially immovable objects such as walls (tags 40, 41, and 42), or desks (tag 44). Infrared signal sources 45 can also be positioned on readily movable objects such as books 55 (tags 50 and 51), a portable electronic device 70 (tag 72), or even writing instruments such as pen 75 (tags 76 and 77). Image processing for spatial localization and data utilizes a computer system, in this example illustrated by a computer system 60. The computer system 60 can of course be located outside room 12, and there is no special requirement for any local computer process control. The computer system is connected by wireless or wired links to video cameras 25, and may be stand-alone or connected to a computer network for distributing image processing duties and allowing for high speed data transfer.

The present system 10 advantageously utilizes emitted infrared signals that are invisible to the human eye yet easily visible to CCD cameras 25. After suitable image processing, the emitted infrared signals from multiple infrared tags provide three dimensional spatial localization for each of those multiple infrared tags. The emitted infrared signals are typically intermittent point source flashes of infrared light (infrared blinks) that appear, along with the visual light image, on frames of CCD video cameras. Since the cameras 25 typically provide between about 10 to 30 frames per second of image data, the blink rate is selected to be less than about 5 to 15 blinks per second to ensure capture of infrared images without aliasing problems. Subtractive image processing between adjacent image frames or other suitable image processing technique is used to enhance and separate the infrared signal from the visual background, allowing the two dimensional spatial pattern of infrared blinks in each image processed frame to be determined. Advantageously, the image processing techniques required to enhance and differentiate infrared point sources in a predominantly visible light image for operation of the present system can be relatively unsophisticated, and do not require elaborate image understanding algorithms.

After two dimensional detection of infrared signal sources is completed, the frames from multiple cameras 25 can be spatially multiplexed using conventional image processing techniques to derive a three dimensional spatial localization of each infrared signal source in room 12. To maximize coverage and ensure three dimensional localization, cameras 25 are arranged so that some combination of at least two cameras have an overlapping field of view on every part of room 12. Each camera 25 can be calibrated to allow for spatial localization through the use of reference objects or camera platform control. For example, a fixed camera 20 having a fixed focal length is calibrated to allow for computation of the angle of two rays entering its lens based on location of two spots in its image. As will be appreciated by those skilled in the art, this angle can be computed from a published focal length of the lens. If necessary, limited experiments can be undertaken to determine an exact mapping that compensates for differing focal lengths and lens distortions. Calibration continues by providing appropriate infrared signal sources at a known distance from a positioned camera that are used as permanent or semi-permanent reference sources for allowing computation of ray angles. Typically, these reference sources are located at junctions of a room (for example, tags 40 and 42 can be used). A new object (such as, for example, infrared tag 41) can be located provided that at least one camera can provide an image of the new object and two reference sources, while a second camera can image the new object and at least one reference source. With additional infrared reference sources detectable by multiple cameras, it is even possible to extend the method so that camera location with respect to the reference sources need not initially be known.

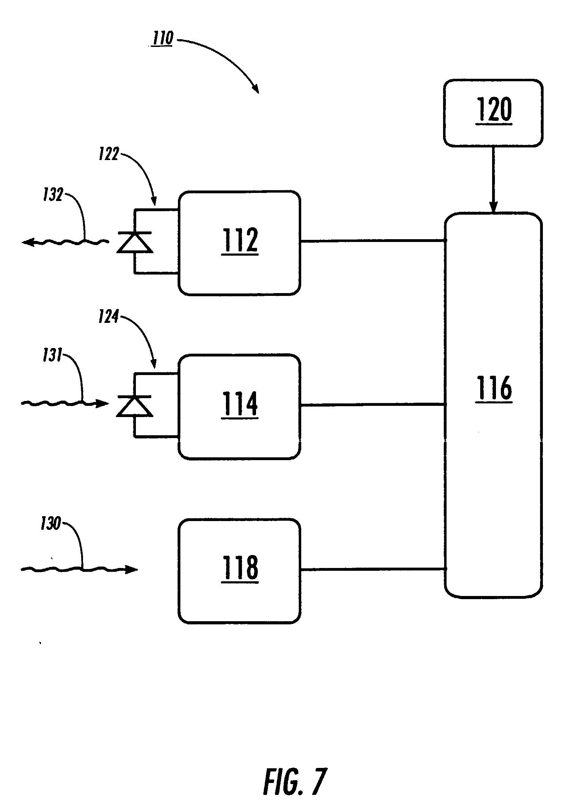

A wide variety of infrared signal sources 45 can be used for camera calibration, spatial localization, identification, and data transfer. For purposes of the present invention, the infrared signal sources 45 can be conceptually divided into active infrared tags 50 that internally generate infrared light 52 (e.g. tag 72 on portable electronic device 70), or passive infrared tags 51 that controllably reflect incident infrared light 54 in response to incident infrared light 32 provided by an infrared light source 30. Active infrared tags are generally larger and more expensive than passive infrared tags, requiring a battery or other power source, an infrared emitter such as an infrared LED, and a suitable digital controller. For example, as seen with reference to Figure 7, an active infrared tag 110 can be built by interconnecting four conventional and widely available modules, including a buffer 112 with IR transmitter LED 122; an amplifier 114 with IR detector 124; a microcontroller 116; and a trigger circuit 118. A lithium battery, photoelectric cell, or other long life power source 120 supplies a low voltage power source for driving the modules. In the default state modules 112, 114, and 116 are held in a power-down mode. The fourth module, the trigger circuit 118, is always active but is designed to operate with a very small power-consumption. When the trigger circuit 118 is activated by an external signal 130 such an infrared or optical pulse, the modules 112, 114, and 116 are powered. Addressing signals 131 may be received at module 114, decoded by module 116 and then a response signal 132 sent back using transmitter LED 122 from module 112. The microcontroller module 116 keeps track of time and after some number of milliseconds or the lack of receiver activity, will return itself (module 116), along with modules 112 and 114, to the power-down state. The response signal 132 (infrared pulses) incorporates the identity of the active infrared tag, along with any desired data.

As will be appreciated, many differing types of trigger circuit can be employed. A simple implementation of a trigger circuit includes a low-power astable-oscillator with a long and slightly random period (to avoid repeated tag-signal collisions) and providing an intermittent or substantially periodic beacon for identification and data transfer purposes. The trigger circuit could also be designed to be activated in response to an external signal. For example, a particularly intense IR flash or reception of a particular radio frequency could be used to activate a trigger circuit. In certain contemplated embodiments, the trigger circuit can even be designed to render the IR detection/amplification module 114 unnecessary.

Passive infrared tags 51 are an inexpensive alternative to active infrared tags 50. Passive infrared tags 51 controllably reflect infrared light 32 provided by an infrared light source 30. The infrared light source 30 can be continuously, intermittently, or periodically operated as required. In the illustrated embodiment, the passive infrared tags 51 each include an infrared reflecting material covered by an alternately light transmissive or light absorptive shutter. Typically, the shutter is an electrically controlled liquid crystal display (LCD) that normally does not transmit substantial amounts of infrared light. A low power electrical signal is applied to convert the shutter from this infrared non-transmissive state to a substantially transmissive state. By appropriately switching between an infrared light transmissive and non-transmissive state, information can be coded in the pattern of infrared reflections 54 from infrared tags 51 that are detected by cameras 25.

As will be appreciated by those skilled in the art, various activation, data transmission, and timing modifications to both infrared light source 30 and passive infrared tags 51 are possible to enhance reliability of information transfer and conserve power. Using techniques similar to that already discussed in connection with active infrared tags 50, the passive infrared tags 51 can be activated to transmit identification codes and other data in response to an infrared trigger signal. This avoids the need for continuous activation of the LCD shutter mechanism and greatly reduces long term power requirements. As with the active infrared tags 50, multiple passive tags can be simultaneously operated, since the spatial localizing camera system of the present invention can unambiguously distinguish between multiple passive tags 51 transmitting information in response to the same activation signal.

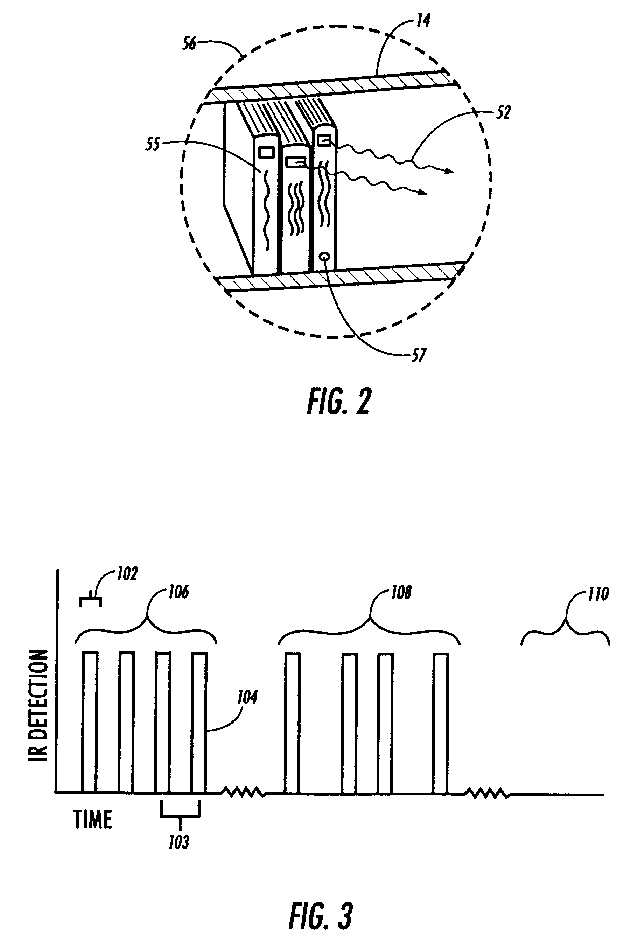

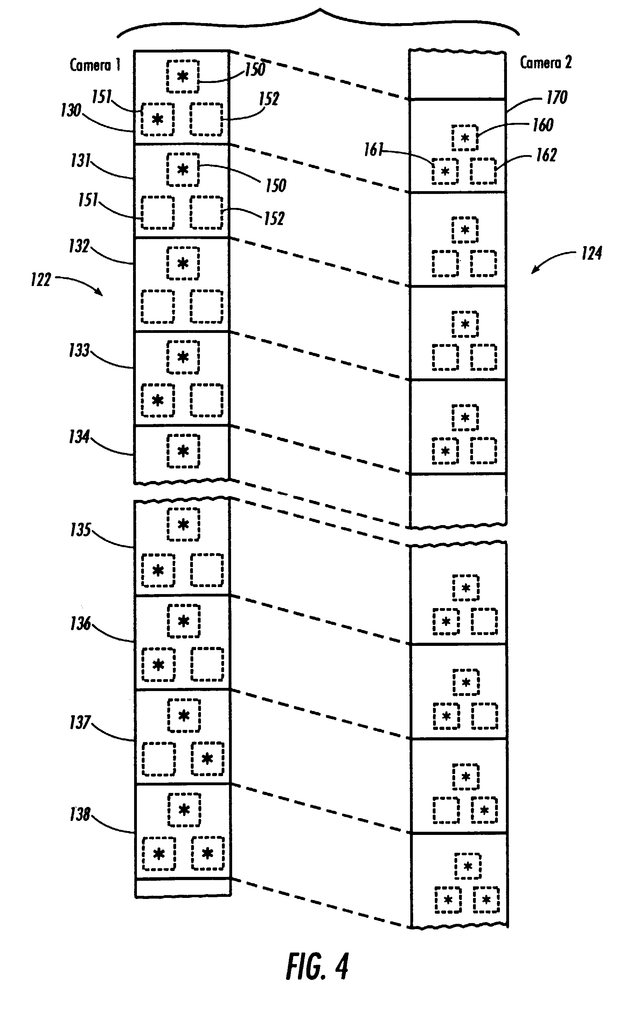

Various information transmission and signaling schemes are suitable for use in the present invention. One preferred scheme, indicated with particular reference to Figures 3 and 4, can be employed by either an active infrared tag 50 or passive infrared tag 51, as desired. Figure 3 is a graph illustrating IR pulse detection versus time, with three distinct modes of pulsed operation shown. Operation of a tag 50 or 51 in locating or initialization mode is represented by a series of detected periodic infrared pulses 104 identified by bracket 106. To conserve power, these pulses 104 may actually consist of multiple brief infrared spikes or pulses, at a rate high enough to ensure apparently continuous detection of an infrared signal by the cameras throughout each pulse 104. Of course, IR intensity can be continuously maintained, rather than pulsed, for the duration of each pulse 104 if power is not limited.

The periodic detected infrared pulses 104 allow for detection of the three dimensional location of a tagged object (e.g. books 55) by cameras 25 and determination of pulse separation 103 between sequential pulses 104. As will be appreciated, to prevent aliasing errors and accurately determined pulse separation, cameras 25 are operated at a frame rate 102 substantially faster than pulse separation 103, with a frame rate two to three times as fast as pulse separation being suggested.

After a brief time (less than a second) periodic blinking is stopped, and transfer of identification information and data commences. Data transfer through blinking of tags 50 or 51 is identified by bracket 108. Absence of a pulse 104 is interpreted as a binary "0", while presence of a pulse 104 is interpreted as a binary "1". As will be appreciated, this allows for information encoding through any number of binary encoding schemes. For best results, use of one or more of the many available error correcting codes are preferred. After identification information and data is sent (after possible multiple resendings), the infrared pulses 104 from tags 50 or 51 can be stopped as indicated by bracket 110 to conserve power. The tags can of course be reactivated at predetermined times, random times, or in response to activation signals as desired.

Detection by cameras 25 of infrared pulses to allow for spatial localization and information transfer is schematically indicated in Figure 4. Two sequences of processed image frames 122 (camera 1) and 124 (camera 2) are illustrated. The cameras have a partially overlapping field of view with three potential infrared pulse sources. Each frame in the sequences 122 and 124 are composite images of several frames, with noninfrared background visual information subtracted to isolate the infrared pulses.

In frame 130 of camera 1, potential positions 150, 151, and 152 of infrared pulses (represented by an asterisk) are indicated by dotted outline. These positions correspond to potential positions 160, 161, and 162 in frame 170 of a differently positioned camera 2. Using image processing techniques such as previously described, the infrared pulses are isolated in frames 122 and 124 of camera 1 and camera 2 and used as reference points. Two dimensional information from each camera is acquired, and merged with calibration information to derive the three dimensional position of the infrared pulse.

The three distinct modes of pulsed operation are shown in the frames 122 and 124. Operation of an infrared tag 50 or 51 in locating or initialization mode is represented by periodic infrared pulses at position 150. Wth each composite and image processed frame 130-138 representing a single pulse separation (corresponding to pulse separation 103 of Figure 3), an infrared pulse is seen at position 150 in each frame 130-138 of frame sequence 122. A corresponding infrared pulse is of course also seen at position 160 in frame sequence 124 for camera 2. This is equivalent to the series of periodic infrared pulses 104 identified by bracket 106 in Figure 3.

Information transfer from another infrared tag is shown through aperiodic blinking of infrared pulses at position 151 in frames 130-138 of frame sequence 122 (and the corresponding position 161 in frame sequence 124). Absence of an infrared pulse in a frame is interpreted as a binary "0" (e.g. frames 131, 132, and 137), while presence of an infrared pulse is interpreted as a binary "1" (e.g. frames 130, 133, 135, 136, 138). Accordingly, as illustrated in Figure 4, the binary sequence "1001 ... 1101" can be determined. This binary sequence can be header information, data, identification, packet control information, error correction information, or any other necessary information that might be transmitted from tags 50 or 51.

As previously noted, after appropriate identification information and data is sent, the infrared pulses can be stopped to conserve power. The tags can of course be reactivated to again identify location of tags and transfer identification information and other data. In Figure 4, this is illustrated by the pattern of infrared pulses at position 152 in frame sequence 122 (and the corresponding position 162 in frame sequence 124). To conserve power, no infrared pulses are emitted during a time period covering frames 130-136. In response to an activation signal, a periodic series of infrared pulses is emitted for localization and initialization purposes, as seen in frames 137 and 138.

In operation, the present system allows for tracking of multiple stationary objects (e.g. books 55 or desk 16 with tag 44), groups of objects, or even multiple slow moving objects (e.g. a person having an attached tag, or a moving laptop computer 70 with attached tag 72 held by a person, or both). With high speed video cameras the present system can be modified to provide spatial localization and tracking of quickly moving objects such as a pen 75 with tags 76 and 77, enabling automated handwriting interpretation through tracking of pen motion. Advantageously, large numbers of objects can be tracked in parallel, without requiring use of sophisticated time or frequency multiplexing tracking technique.

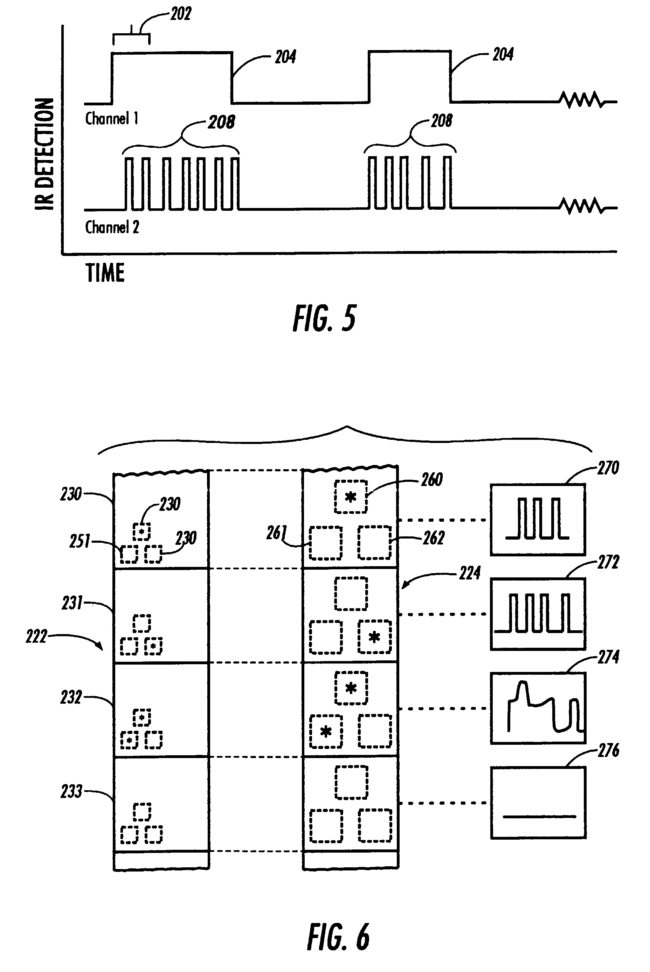

However, without the use of high speed cameras, the major limitation of the foregoing embodiment is its relatively low data transfer rate. Because bit transfer is closely associated with the frame rate of the cameras, the relatively low frame rate of widely available low cost cameras limits the theoretical data transfer rate to 10 or 20 bits per second. In practice, because of the necessary overhead associated with error control, bit transfer rates will be even lower. One possible way of overcoming this problem is the use of secondary high speed data communication channels for data transfer, while low data transfer rate infrared pulse/camera detection systems are used for spatial localization. One example of a dual communication channel system is illustrated in Figures 5 and 6.

Figure 5 is a graph illustrating IR detection versus time for two separate infrared communication channels. Infrared pulses 204 of communication channel 1 are detected by cameras operating at a frame rate 202, using processes described in connection with Figures 3 and 4. A separate, higher speed infrared communication channel 2 with much shorter infrared pulses is detectable by a separate (non-camera based) infrared communication system. In preferred embodiments, infrared pulses in accordance with applicable IRDA (Infrared Data Association) standards can be used for data transfer on channel 2, although any high speed communication channel, including radio or optical messaging, can be used. In operation, the infrared pulses of channel 1 are used for spatial localization of an infrared tag, while a time coincident communication on channel 2 provides high speed data transfer. For example, in Figures 1 and 2, a high speed infrared communication system operating at about 19.2 kilobits per second includes an infrared tag 57 and a high speed infrared detector 64 attached to computer 60. Spatial localization is provided by cameras 25 detecting low speed infrared pulses, while any time coincident data received on the high speed channel is associated with a tag at the identified spatial location. Of course, use of time coincident communication results in a somewhat reduced data throughput due to statistically determinable data collisions (when two or more tags simultaneously transmit data, resulting in destructive data overlap), but is adequate for most situations.

Time coincident data transfer methods in accordance with the present invention can be better understood with reference to Figure 6. Two image processed frame sequences 222 and 224 taken from different cameras are illustrated, along with an example of high speed data (boxes 270, 272, 274, and 276) time coincidently received with the indicated frames. Data can be received from three separate tags located at three different spatial positions (positions 250, 251, and 252 frame sequence 222, positions 260, 261, and 262 in frame sequence 224). Using previously discussed techniques, an infrared pulse (denoted by an asterisk) can be positively located in three dimensions given the two dimensional frame sequences 222 and 224. If possible, the spatial location data is correlated with the high speed data to provide spatial localization of a specifically identified tag.

Figure 6 illustrates several possible outcomes for time coincident spatial localization methods in accordance with the present invention. Frame 230 shows a spatially localizable infrared pulse at position 250. Time coincident data 270 is attributed to a tag emitting the infrared pulse position at position 250, assuming there is no data collision. Data collision can occur when two or more data packets are simultaneously received, or when the spatially localizable infrared pulses overlap. Frame 231 illustrates one situation without data collision, with an infrared pulse at position 252 being correlated with identification data 272. However, if two or more tags are active during the same time period, as seen in frame 232, the received signal 274 is the garbled result of a data packet collision, and the signal is ignored. After preprogrammed random delays (seen in frame 233) or active requests to retransmit, the tags are again activated, with hopefully non-overlapping data transfer to allow for unique identification. Note that in certain cases of infrared pulse overlap, a data collision does not necessarily occur, and it may be possible to link spatial location and data through consideration of previously received infrared spatial locations.

While the present invention has been described in conjunction with specific embodiments thereof, it is evident that many alternatives, modifications, and variations will be apparent to those skilled in the art. Accordingly, the various embodiments described herein should be considered illustrative, and not limiting the scope of the present invention as defined in the following claims.

## Claims

1. A system for precisely locating infrared tags, comprising:
at least two video cameras capable of detecting infrared light, each of the video cameras being configured to provide a sequence of images,
an infrared tag for providing modulated infrared signals,
an image processing system configured to extract the modulated infrared signals from the sequence of images and identify the spatial location of the infrared tag.

2. The system of claim 1, wherein at least one infrared tag is attached to an object, with data relating to the object encoded in the infrared tag.

3. The system of claim 1 or 2, wherein the infrared tag actively emits modulated infrared signals to identify the infrared tag.

4. The system of claim 3, wherein the infrared tag emits predetermined infrared detection signals at a rate less than the frame rate of the video cameras.

5. The system of any of claims 1 to 4, further comprising a separate communication channel receiver for reception of identification signals emitted substantially time coincident with detection signals used to establish spatial location of the infrared tag.

6. The system of any of the preceding claims, further comprising a polling system for requesting specified infrared tags to emit infrared detection signals, establishing spatial location of the specified infrared tag.

7. The system of any of the preceding claims, wherein the modulated infrared signals of the infrared tag transfer object identification information, and/or data.

8. The system of any of claims 2 to 7, wherein a plurality of infrared tags are attached to an object to allow determination of orientation.

9. A system for precisely locating identification tags, comprising:
at least two video cameras, each video camera being configured to provide a sequence of images at a first frame rate,
an identification tag for providing a series of spaced apart signals at a second frame rate, less than the first frame rate, the signals being perceptible by the video cameras,
an image processing system configured to extract the three dimensional spatial location of the identification tags from the sequence of images, and
a data transfer system for transferring data from the identification tag, the data being correlated with the three dimensional spatial location of the identification tag as determined by the image processing system.

10. The system of claim 9, wherein infrared signals on a first communication channel are used to establish three dimensional spatial location, and wherein the data transfer system further comprises time coincident signals on a second communication channel, wherein the second communication channel has a substantially higher data transfer rate than the first communication channel.
